# EUROPÄISCHE PATENTSCHRIFT

(11) **EP 4 345 427 B1**
(45) Veröffentlichungstag und Bekanntmachung des Hinweises auf die Patenterteilung: **01.04.2026**
(21) Anmeldenummer: 23200098.4
(22) Anmeldetag: 27.09.2023
(51) Int. Cl.: G01F 25/00, G01F 25/10, G01F 25/20, B67C 3/00, B67C 3/02, B67C 3/22

(54) **VERFAHREN ZUM KALIBRIEREN EINER ABFÜLLANLAGE UND ABFÜLLANLAGE**
METHOD FOR CALIBRATING A FILLING SYSTEM AND FILLING SYSTEM
PROCÉDÉ D'ÉTALONNAGE D'UNE INSTALLATION DE REMPLISSAGE ET INSTALLATION DE REMPLISSAGE

(30) Priorität: 28.09.2022 DE 102022124947
(43) Veröffentlichungstag der Anmeldung: 03.04.2024
(73) Patentinhaber: Krohne Messtechnik GmbH, 47058 Duisburg (DE)
(72) Erfinder: Kuschnerus, Dirk, 47802 Krefeld (DE); Lüke, Christopher, 45892 Wesel (DE); Walbrecker, Sven, 27639 Wurster Nordseeküste (DE)
(74) Vertreter: Gesthuysen Patentanwälte

(56) Entgegenhaltungen:
- DE-A1- 102010 053 201
- DE-A1- 102013 104 707
- DE-A1- 102020 129 074
- DE-A1- 102020 130 738
- US-A1- 2007 199 365

## Beschreibung

Die Erfindung betrifft ein Verfahren zum Kalibrieren einer Abfüllanlage mit wenigstens einer ersten Füllstelle und wenigstens einer zweiten Füllstelle, wobei die erste Füllstelle wenigstens ein erstes werkseitig kalibriertes Durchfluss- oder Füllstandmessgerät mit einer ersten Steuer- und Auswerteeinheit aufweist und die zweite Füllstelle wenigstens ein zweites werkseitig kalibriertes Durchfluss- oder Füllstandmessgerät mit einer zweiten Steuer- und Auswerteeinheit aufweist, wobei die Anzahl der werkseitigen Kalibrierpunkte des ersten Durchfluss- oder Füllstandmessgerätes größer ist als die Anzahl der werkseitigen Kalibrierpunkte des zweiten Durchfluss- oder Füllstandmessgerätes und/oder wobei die Verweildauer in wenigstens einem Kalibrierpunkt bei dem ersten Durchfluss- oder Füllstandmessgerät größer ist als die Verweildauer in wenigstens einem Kalibrierpunkt bei dem zweiten Durchfluss- oder Füllstandmessgerät, und wobei die Steuer- und Auswerteeinheit des wenigstens ersten Durchfluss- oder Füllstandmessgerätes und die Steuer- und Auswerteeinheit des wenigstens zweiten Durchfluss- oder Füllstandmessgerätes zumindest mittelbar über einen Kommunikationskanal miteinander verbunden sind. Zudem betrifft die Erfindung eine entsprechende Abfüllanlage.

Abfüllanlagen sind in einer Vielzahl aus dem Stand der Technik bekannt und werden verwendet, um verschiedenste Medien in Behältnisse abzufüllen. Hierzu weisen Abfüllanlagen in der Regel eine Mehrzahl von Füllstellen auf, wobei jede Füllstelle wenigstens ein Füllventil zum Einstellen der Fließöffnung, ein Durchfluss- oder Füllstandmessgerät zur Bestimmung der Durchflussmenge oder eines Füllstandswertes sowie eine Steuer- und Auswerteeinheit zur Regelung und Überwachung der Abfüllprozesse einer Füllstelle auf.

Um eine hohe Abfüllgenauigkeit zu gewährleisten, ist es notwendig, die in der Abfüllanlage verbauten Durchfluss- oder Füllstandmessgeräte zu kalibrieren. In der Praxis ist es zunächst üblich, die Durchfluss- oder Füllstandmessgeräte werkseitig zu kalibrieren, also beim Hersteller zu kalibrieren, und die werkseitig kalibrierten Messgeräte dann beim Kunden im Prozess unter Prozessbedingungen nachzukalibrieren. Eine werkseitige Kalibrierung erfolgt in der Regel unter sogenannten Referenzbedingungen mit einem Referenzmedium unter vorgegebenen Referenzparametern, wie beispielsweise einer Referenztemperatur und/oder einem Referenzdruck. Diese Referenzbedingungen liegen im Prozess in der Regel nicht vor, sodass die werkseitige Kalibrierung nicht ausreichend ist.

Um den werkseitigen Kalibrieraufwand weitestgehend zu reduzieren, werden in der Regel nur einige wenige Kalibrierpunkte angefahren. Bei der Kalibrierung eines Durchflussmessgerätes werden beispielsweise einige wenige Durchflusswerte kalibriert. Es sind jedoch auch solche Geräte bekannt, bei denen bei der werkseitigen Kalibrierung eine deutlich höhere Anzahl von Kalibrierungspunkten angefahren wird und/oder bei welchen die Verweildauer je Kalibrierpunkt deutlich höher ist, als bei der standardmäßigen werkseitigen Kalibrierung. Solche Geräte weisen entsprechend eine bessere Messgenauigkeit auf, als standardmäßig kalibrierte Messgeräte.

Die DE 10 2020 130738 A1 offenbart ein Verfahren zum Kalibrieren eines Füllorgans in einer Abfüllanlage, wobei die Abfüllanlage eine Mehrzahl von Füllorganen zum Abfüllen eines Füllprodukts in Behälter aufweist und das Verfahren die Schritte des Einleitens des Füllprodukts in eine Referenzleitung eines als Referenzfüllorgan ausgewählten Füllorgans zur Erzeugung eines Referenzdurchflusses, des Messens des Referenzdurchflusses in dem Referenzfüllorgan zum Erhalt eines Referenzmesswerts, des Einleitens des Referenzdurchflusses in ein erstes Füllorgan zur Erzeugung eines ersten Fülldurchflusses, des Messens des ersten Fülldurchflusses in dem ersten Füllorgan zum Erhalt eines ersten Füllorganmesswerts, und des Ermittelns eines ersten Kalibrierungsparameters durch Vergleichen des Referenzmesswerts mit dem ersten Füllorganmesswerts umfasst.

Eine prozessseitige Kalibrierung wird sowohl bei Inbetriebnahme einer Abfüllanlage als auch bei dem Wechsel eines Mediums durchgeführt, um die Messgenauigkeit der Durchfluss- oder Füllstandmessgeräte gewährleisten zu können. Da Abfüllanlagen viele, beispielsweise einige hunderte, Füllstellen aufweisen, entsprechend also auch viele Durchfluss- oder Füllstandmessgeräte aufweisen, ist das prozessseitige Kalibrieren mit sehr viel Aufwand verbunden.

Der Erfindung liegt die Aufgabe zugrunde, ein Verfahren zum Kalibrieren einer Abfüllanlage sowie eine entsprechende Abfüllanlage bereitzustellen, mit dem bzw. mit der der zum Kalibrieren der Abfüllanlage notwendige Aufwand minimiert werden kann.

Die Aufgabe ist bei dem erfindungsgemäßen Verfahren dadurch gelöst, dass folgende Verfahrensschritte durchgeführt werden:
Zunächst wird in einem ersten Kalibrierschritt unter Prozessbedingungen eine Kalibrierung einer Kalibriergröße des ersten Durchfluss- oder Füllstandmessgerätes in einem ersten Kalibrierpunkt durchgeführt. Welche Kalibriergröße kalibriert wird, ist insbesondere von der Art des in der Abfüllanlage verbauten Messgerätes abhängig. Ist beispielsweise ein Durchflussmessgerät verbaut, so kann die Kalibriergröße der Durchfluss sein. Ist hingegen ein Füllstandmessgerät verbaut, dann kann die Kalibriergröße der Füllstand sein. Sowohl an der ersten Füllstelle als auch an der zweiten Füllstelle ist die gleiche Art von Messgerät verbaut. Sowohl die erste Füllstelle als auch die zweite Füllstelle weisen demnach beide ein Durchflussmessgerät oder beide ein Füllstandmessgerät auf. Dem steht nicht entgegen, dass an zwei anderen Füllstellen die andere Art von Messgerät verbaut sein kann.

Das erfindungsgemäße Verfahren zeichnet sich weiter dadurch aus, dass in einem ersten Abweichbestimmungsschritt die erste Steuer- und Auswerteeinheit des ersten Durchfluss- oder Füllstandmessgerätes eine durchschnittliche Abweichung der von dem ersten Durchfluss- oder Füllstandmessgerät gemessenen Kalibriergröße zu einem Sollwert dieser Kalibriergröße im ersten Kalibrierpunkt ermittelt. In einem anschließenden ersten Korrekturschritt korrigiert die erste Steuer- und Auswerteeinheit den wenigstens einen Kalibrierungsparameter unter Berücksichtigung der ermittelten Abweichung.

Gemäß dem erfindungsgemäßen Verfahren übermittelt die erste Steuer- und Auswerteeinheit in einem ersten Übermittlungsschritt die ermittelte Abweichung im ersten Kalibrierpunkt und/oder den wenigstens einen korrigierten Kalibrierungsparameter über den Kommunikationskanal an die zweite Steuer- und Auswerteeinheit. Zudem korrigiert die zweite Steuer- und Auswerteeinheit in einem ersten Anpassungsschritt den wenigstens einen Kalibrierungsparameter in einem ersten Kalibrierpunkt unter Berücksichtigung der von der ersten Steuer- und Auswerteeinheit übermittelten Abweichung oder des übermittelten Kalibrierungsparameters. Der Kalibrierpunkt des zweiten Durchfluss- oder Füllstandmessgerät stimmt hierbei mit dem Kalibrierpunkt des ersten Durchfluss- oder Füllstandmessgerätes überein. Es werden also die Kalibrierungsparameter für den gleichen Durchfluss oder den gleichen Füllstand korrigiert.

Besonders bevorzugt bestätigt die zweite Steuer- und Auswerteeinheit den Empfang der übermittelten Daten der ersten Steuer- und Auswerteeinheit.

Erfindungsgemäß ist erkannt worden, dass der Kalibrieraufwand erheblich dadurch reduziert werden kann, dass nicht jedes einzelne Durchfluss- oder Füllstandmessgerät einzeln kalibriert wird. Erfindungsgemäß ist erkannt worden, dass es ausreichend ist, wenigstens ein Durchfluss- oder Füllstandmessgerät zu kalibrieren und die Kalibrierdaten an wenigstens ein weiteres Durchfluss- oder Füllstandmessgerät zu übermitteln, welches dann wiederum seine Kalibrierdaten anpasst.

Die Erfindung wird hier anhand von zwei Füllstellen beschrieben, ist jedoch ohne weiteres übertragbar auf eine Vielzahl von Füllstellen. Erfindungsnotwendig ist lediglich, dass das erste Durchfluss- oder Füllstandmessgerät bzw. die Steuer- und Auswerteeinheit des ersten Durchfluss- oder Füllstandmessgerätes über Kommunikationskanäle mit den weiteren Steuer- und Auswerteeinheiten der weiteren Durchfluss- oder Füllstandmessgeräte verbunden ist, sodass eine Kommunikation stattfinden kann.

In der Regel sind in der Praxis alle Füllstellen einer Abfüllanlage baugleich ausgebildet, weisen also beispielsweise alle ein Durchflussmessgerät oder alle ein Füllstandmessgerät auf. Die Erfindung ist jedoch auch ohne weiteres übertragbar bzw. anwendbar für Abfüllanlagen, bei denen ein Teil der Füllstellen Durchflussmessgeräte und ein Teil der Füllstellen Füllstandmessgeräte aufweist. Hier ist es dann notwendig, dass jeweils solche Füllstellen miteinander kommunizieren, die die gleiche Art von Messgerät aufweisen.

In einer besonders bevorzugten Variante des erfindungsgemäßen Verfahrens werden die zuvor beschriebenen Verfahrensschritte in wenigstens einem weiteren Kalibrierpunkt durchgeführt. Ein weiterer Kalibrierpunkt kann zum Beispiel ein weiterer Durchfluss oder eine weitere Füllhöhe sein. Gemäß dieser Ausgestaltung wird also in wenigstens einem zweiten Kalibrierschritt unter Prozessbedingungen eine Kalibrierung einer Kalibriergröße des ersten Durchfluss- oder Füllstandmessgerätes in einem zweiten Kalibrierpunkt durchgeführt, in wenigstens einem zweiten Abweichbestimmungsschritt von der ersten Steuer- und Auswerteeinheit des ersten Durchfluss- oder Füllstandmessgerätes eine durchschnittliche Abweichung der von dem ersten Durchfluss- oder Füllstandmessgerät gemessenen Kalibriergröße zu einem Sollwert dieser Kalibriergröße im zweiten Kalibrierpunkt ermittelt, in wenigstens einem zweiten Korrekturschritt von der ersten Steuer- und Auswerteeinheit wenigstens ein Kalibrierungsparameter unter Berücksichtigung der ermittelten Abweichung korrigiert, in wenigstens einem zweiten Übermittlungsschritt von der ersten Steuer- und Auswerteeinheit die ermittelte Abweichung im zweiten Kalibrierpunkt und/oder den wenigstens einen korrigierten Kalibrierungsparameter über den Kommunikationskanal an die zweite Steuer- und Auswerteeinheit übermittelt, und in wenigstens einem zweiten Anpassungsschritt von der zweiten Steuer- und Auswerteeinheit wenigstens ein Kalibrierungsparameter in einem zweiten Kalibrierpunkt unter Berücksichtigung der von der ersten Steuer- und Auswerteeinheit übermittelten Abweichung oder des übermittelten Kalibrierungsparameters korrigiert.

Besonders bevorzugt werden die Verfahrensschritte in weiteren Kalibrierpunkten durchgeführt, nämlich ganz besonders bevorzugt in den werkseitigen Kalibrierpunkten des zweiten Durchfluss- oder Füllstandmessgerätes. Um eine noch genauere Kalibrierung zu ermöglichen, werden in einer weiteren Ausführungsform die Verfahrensschritte in den werkseitigen Kalibrierpunkten des ersten Durchfluss- oder Füllstandmessgerätes durchgeführt. Da die Anzahl der werkseitigen Kalibrierungspunkte des ersten Durchfluss- oder Füllstandmessgerätes größer ist als die Anzahl der werkseitigen Kalibrierungspunkte des zweiten Durchfluss- oder Füllstandmessgerätes, wird hierdurch die Genauigkeit der Kalibrierung weiter erhöht. Insbesondere ergibt sich so der Vorteil, dass auch das zweite Durchfluss- oder Füllstandmessgerät, oder für den Fall, dass weitere Durchfluss- oder Füllstandmessgeräte in der Abfüllanlage verbaut und in das Verfahren eingebunden werden, in der Vielzahl der Kalibrierungspunkte des ersten Durchfluss- oder Füllstandmessgerätes kalibriert wird. Somit ermöglicht das erfindungsgemäße Verfahren eine sehr gute Kalibrierung sämtlicher verbauter Durchfluss- oder Füllstandmessgeräte bei geringem Kalibrierungsaufwand.

In einer besonders bevorzugten Ausführungsform des erfindungsgemäßen Verfahrens ist vorgesehen, dass der erste Übermittlungsschritt zur Übermittlung der Abweichung im ersten Kalibrierpunkt und der wenigstens weitere Übermittlungsschritt zur Übermittlung der Abweichung im zweiten Kalibrierpunkt, besonders bevorzugt weitere oder alle weiteren Übermittlungsschritte zur Übermittlung der Abweichungen in mehreren, bevorzugt allen Kalibrierungspunkten, in einem gemeinsamen Gesamtübermittlungsschritt erfolgen. Dies setzt voraus, dass zuvor sämtliche Abweichungen in den entsprechenden Kalibrierungspunkten ermittelt werden. Die zweite Steuer- und Auswerteeinheit des zweiten Durchfluss- oder Füllstandmessgerätes empfängt dann sämtliche Abweichungen für die verschiedenen Kalibrierpunkte und kann die Anpassung in sämtlichen Kalibrierpunkten ebenfalls in einem Gesamtanpassungsschritt vornehmen.

Der Kalibrierschritt kann erfindungsgemäß auf verschiedene Art und Weise ausgeführt werden. In einer besonders bevorzugten ersten Variante des erfindungsgemäßen Verfahrens wird zur Kalibrierung der Kalibriergröße eine vorgegebene Anzahl an Abfüllungen an der ersten Füllstelle durchgeführt. Nach jeder erfolgten Abfüllung wird die tatsächlich abgefüllte Menge Medium bestimmt. In der bevorzugten ersten Variante erfolgt die Bestimmung der tatsächlich abgefüllten Menge Medium durch Auswiegen. In einer zweiten bevorzugten Variante erfolgt die Bestimmung der tatsächlich abgefüllten Menge Medium durch eine Messung mit einem auf Prozessbedingungen bereits kalibrierten weiteren Durchfluss- oder Füllstandmessgerät. Erfindungsgemäß ist dann vorgesehen, dass der Wert der tatsächlich abgefüllten Menge des Mediums mit dem von dem zu kalibrierenden Durchfluss- oder Füllstandmessgerät bestimmten Wert verglichen und die Abweichung bestimmt wird.

Eine weitere bevorzugte Ausführungsform des erfindungsgemäßen Verfahrens ist dadurch ausgezeichnet, dass zur Bestimmung der Abweichung im Abweichbestimmungsschritt eine Standardabweichung ermittelt wird.

In einer besonders bevorzugten Ausführungsform des erfindungsgemäßen Verfahrens wird in dem Korrekturschritt wenigstens eine Stützstelle einer Optimierungskurve als Kalibrierungsparameter korrigiert. In einer weiteren bevorzugten Ausführungsform wird in dem Korrekturschritt eine Geberkonstante als Kalibrierungsparameter korrigiert. Die Geberkonstante ist hierbei ein Parameter, durch den ein Zusammenhang zwischen Rohmesswert und Ausgabewert beschrieben wird.

In einer Ausführungsform werden die erste Steuer- und Auswerteeinheit und die zweite Steuer- und Auswerteeinheit von einer übergeordneten Steuer- und Auswerteeinheit der Abfüllanlage zur Ausführung der Verfahrensschritte aufgefordert.

Neben dem Verfahren zum Kalibrieren einer Abfüllanlage betrifft die Erfindung ebenfalls eine Abfüllanlage. Die Abfüllanlage weist wenisgtens eine erste Füllstelle und wenigstens eine zweite Füllstelle auf. Die erste Füllstelle weist wenigstens ein erstes werkseitig kalibriertes Durchfluss- oder Füllstandmessgerät mit einer ersten Steuer- und Auswerteeinheit auf, die zweite Füllstelle weist wenigstens ein zweites werkseitig kalibriertes Durchfluss- oder Füllstandmessgerät mit einer zweiten Steuer- und Auswerteeinheit auf. Die Anzahl der werkseitigen Kalibrierpunkte des ersten Durchfluss- oder Füllstandmessgerätes ist hierbei größer als die Anzahl der werkseitigen Kalibrierpunkte des zweiten Durchfluss- oder Füllstandmessgerätes und/oder die Verweildauer in wenigstens einem Kalibrierpunkt ist bei dem ersten Durchfluss- oder Füllstandmessgerät größer als die Verweildauer in wenigstens einem Kalibrierpunkt bei dem zweiten Durchfluss- oder Füllstandmessgerät. Zudem sind die Steuer- und Auswerteeinheit des wenigstens ersten Durchfluss- oder Füllstandmessgerätes und die Steuer- und Auswerteeinheit des wenigstens zweiten Durchfluss- oder Füllstandmessgerätes über einen Kommunikationskanal miteinander verbunden.

Die Aufgabe ist bei der erfindungsgemäßen Abfüllanlage zunächst und im Wesentlichen dadurch gelöst, dass die Steuer- und Auswerteeinheit des ersten Durchfluss- oder Füllstandmessgerätes und die Steuer- und Auswerteeinheit des zweiten Durchfluss- oder Füllstandmessgerätes derart ausgestaltet sind, dass sie im Betrieb der Abfüllanlage die oben beschriebenen Verfahrensschritte des erfindungsgemäßen Verfahrens ausführen. Die erfindungsgemäße Abfüllanlage zeichnet sich demnach dadurch aus, dass die erste Steuer- und Auswerteeinheit derart ausgestaltet ist, dass sie im Betrieb der Abfüllanlage in einem ersten Kalibrierschritt unter Prozessbedingungen eine Kalibrierung einer Kalibriergröße des ersten Durchfluss- oder Füllstandmessgerätes in einem ersten Kalibrierpunkt durchführt, dass sie in einem ersten Abweichbestimmungsschritt eine durchschnittliche Abweichung der von dem ersten Durchfluss- oder Füllstandmessgerät gemessenen Kalibriergröße zu einem Sollwert dieser Kalibriergröße im ersten Kalibrierpunkt ermittelt, dass sie in einem ersten Korrekturschritt wenigstens einen Kalibrierungsparameter unter Berücksichtigung der ermittelten Abweichung korrigiert und dass sie in einem ersten Übermittlungsschritt die ermittelte Abweichung im ersten Kalibrierpunkt und/oder den wenigstens einen korrigierten Kalibrierungsparameter über den Kommunikationskanal an die zweite Steuer- und Auswerteeinheit übermittelt. Die zweite Steuer- und Auswerteeinheit ist entsprechend derart ausgestaltet, dass sie in einem ersten Anpassungsschritt wenigstens einen Kalibrierungsparameter in einem ersten Kalibrierpunkt unter Berücksichtigung der von der ersten Steuer- und Auswerteeinheit übermittelten Abweichung oder des übermittelten Kalibrierungsparameters korrigiert.

In weiteren erfindungsgemäßen Ausgestaltungen ist die erfindungsgemäße Abfüllanlage derart ausgestaltet, dass die erste Steuer- und Auswerteeinheit und die zweite Steuer- und Auswerteeinheit ferner derart ausgestaltet sind, dass sie im Betrieb der Abfüllanlage wenigstens einen der weiteren beschriebenen Verfahrensschritte ausführen.

Sämtliche in Zusammenhang mit dem erfindungsgemäßen Verfahren beschriebenen Ausführungsformen mit ihren Vorteilen sind analog auf die erfindungsgemäße Abfüllanlage übertragbar und gelten entsprechend.

Weiter bevorzugt zeichnet sich eine erfindungsgemäße Ausgestaltung der Abfüllanlage dadurch aus, dass die erste Steuer- und Auswerteeinheit und die zweite Steuer- und Auswerteeinheit als Untereinheiten einer übergeordneten Steuer- und Auswerteeinheit ausgebildet sind. In einer weiteren Ausgestaltung ist eine übergeordnete Steuer- und Auswerteeinheit vorgesehen, die derart ausgestaltet ist, dass sie die erste Steuer- und Auswerteeinheit und die zweite Steuer- und Auswerteeinheit zur Durchführung der beschriebenen Verfahrensschritte auffordert.

Zudem ist eine weitere Ausgestaltung der erfindungsgemäßen Abfüllanlage dadurch ausgezeichnet, dass der Kommunikationskanal zwischen der ersten Steuer- und Auswerteeinheit und der wenigstens zweiten Steuer- und Auswerteeinheit drahtgebunden ausgebildet ist. In einer alternativen Ausgestaltung ist der Kommunikationskanal drahtlos ausgebildet.

Im Einzelnen gibt es nun eine Vielzahl von Möglichkeiten, das erfindungsgemäße Verfahren sowie die erfindungsgemäße Abfüllanlage auszugestalten und weiterzubilden. Hierzu wird verwiesen auf die den nebengeordneten Patentansprüchen nachgeordneten Patentansprüche sowie auf die Beschreibung bevorzugter Ausgestaltungen in Verbindung mit der Zeichnung. In der Zeichnung zeigen
- Fig. 1: ein Blockdiagramm eines ersten Verfahrens zum Kalibrieren einer Abfüllanlage,
- Fig. 2: ein Blockdiagramm eines zweiten Verfahrens zum Kalibrieren einer Abfüllanlage,
- Fig. 3: eine schematische Darstellung einer ersten Abfüllanlage und
- Fig. 4: eine schematische Darstellung einer zweiten Abfüllanlage.

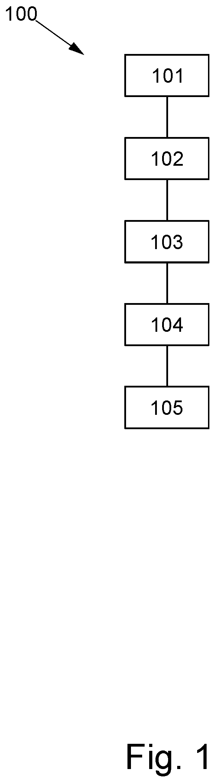

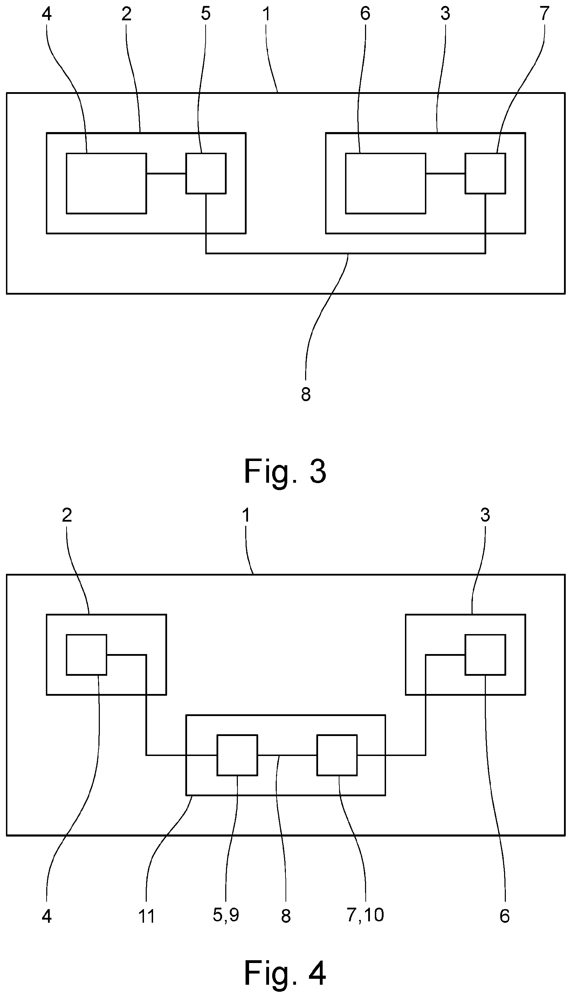

In Fig. 1 ist ein Blockdiagramm eines Verfahrens 100 zum Kalibrieren einer Abfüllanlage 1 dargestellt. Eine entsprechende Abfüllanlage 1 ist in Fig. 3 dargestellt. Die Abfüllanlage 1 weist eine erste Füllstelle 2 und eine zweite Füllstelle 3 auf. Die erste Füllstelle 2 weist ein erstes werkseitig kalibriertes Durchflussmessgerät 4 mit einer ersten Steuer- und Auswerteeinheit 5 auf, wohingegen die zweite Füllstelle 3 ein zweites werkseitig kalibriertes Durchflussmessgerät 6 mit einer zweiten Steuer- und Auswerteeinheit 7 aufweist. In alternativen Abfüllanlagen 1 können die Messgeräte als Füllstandmessgeräte ausgebildet sein. Das erste Durchflussmessgerät 4 zeichnet sich gegenüber dem zweiten Durchflussmessgerät 6 dadurch aus, dass die Anzahl der werkseitigen Kalibrierpunkte des ersten Durchflussmessgerätes 4 größer ist als die Anzahl der werkseitigen Kalibrierpunkte des zweiten Durchflussmessgerätes 6. Zudem ist bei der dargestellten Ausgestaltung die Verweildauer in wenigstens einem Kalibrierpunkt, nämlich einer ersten Durchflussgeschwindigkeit, bei dem ersten Durchflussmessgerät 4 größer ist als die Verweildauer in dem gleichen Kalibrierpunkt bei dem zweiten Durchflussmessgerät 6. Wie in der Darstellung zu erkennen, sind die Steuer- und Auswerteeinheit 5 des ersten Durchflussmessgerätes 4 und die Steuer- und Auswerteeinheit 7 des zweiten Durchflussmessgerätes 6 über einen Kommunikationskanal 8 miteinander verbunden. Die erste Steuer- und Auswerteeinheit 5 sowie die zweite Steuer- und Auswerteeinheit 7 sind ausgebildet, das in Fig. 1 dargestellte Verfahren 100 durchzuführen, das im Folgenden beschrieben wird.

Fig. 1 zeigt ein Blockdiagramm einer ersten Ausführungsform eines Verfahrens 100 zum Kalibrieren einer Abfüllanlage 1. Das dargestellte Verfahren 100 wird bevorzugt bei Inbetriebnahme einer Abfüllanlage 1 oder bei einem Wechsel des abzufüllenden Mediums durchgeführt. Das Verfahren 100 wird unter Prozessbedingungen durchgeführt. In einem ersten Kalibrierschritt 101 wird eine Kalibrierung einer Kalibriergröße des ersten Durchflussmessgerätes 4 in einem ersten Kalibrierpunkt durchgeführt. Anschließend wird in einem ersten Abweichbestimmungsschritt 102 von der ersten Steuer- und Auswerteeinheit 5 des ersten Durchflussmessgerätes 4 eine durchschnittliche Abweichung der von dem ersten Durchflussmessgerät 4 gemessenen Kalibriergröße, nämlich vorliegend dem Durchfluss, zu einem Sollwert dieser Kalibriergröße im ersten Kalibrierpunkt, nämlich einem ersten eingestellten Durchflusswert, ermittelt. In einem ersten Korrekturschritt 103 korrigiert die erste Steuer- und Auswerteeinheit 4 wenigstens einen Kalibrierungsparameter unter Berücksichtigung der ermittelten Abweichung. Anschließend übermittelt die erste Steuer- und Auswerteeinheit 4 in einem ersten Übermittlungsschritt 104 die ermittelte Abweichung im ersten Kalibrierpunkt und/oder den wenigstens einen korrigierten Kalibrierungsparameter über den Kommunikationskanal 8 an die zweite Steuer- und Auswerteeinheit 7 des zweiten Durchflussmessgerätes 6. In einem ersten Anpassungsschritt 105 korrigiert die zweite Steuer- und Auswerteeinheit 7 wenigstens einen Kalibrierungsparameter in dem ersten Kalibrierpunkt unter Berücksichtigung der von der ersten Steuer- und Auswerteeinheit 7 übermittelten Abweichung oder des übermittelten Kalibrierungsparameters. Somit erfolgt eine indirekte Kalibrierung des zweiten Durchflussmessgerätes 6 anhand der Übermittlung der entsprechenden Daten und Korrektur des entsprechenden Kalibrierungsparameters. Somit wird der Aufwand der Kalibrierung der Abfüllanlage erheblich reduziert.

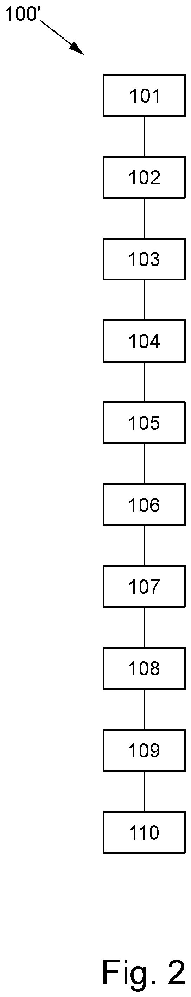

Fig. 2 zeigt ein Blockdiagramm einer zweiten Ausführungsform eines Verfahrens 100 zum Kalibrieren einer Abfüllanlage 1. Das in Fig. 2 dargestellte Verfahren 100 weist neben den bereits in Zusammenhang mit dem in Fig. 1 dargestellten Verfahren 100 weitere zusätzliche Verfahrensschritte 106 bis 110 auf. In einem zweiten Kalibrierschritt 106 wird eine Kalibrierung der Kalibriergröße des ersten Durchflussmessgerätes 4 in einem zweiten Kalibrierpunkt durchgeführt. Ein zweiter Kalibrierpunkt ist hier ein weiterer Durchflusswert. Anschließend wird in einem zweiten Abweichbestimmungsschritt 107 von der ersten Steuer- und Auswerteeinheit 5 des ersten Durchflussmessgerätes 4 eine durchschnittliche Abweichung der von dem ersten Durchflussmessgerät 4 gemessenen Kalibriergröße, nämlich vorliegend dem Durchfluss, zu einem Sollwert dieser Kalibriergröße im zweiten Kalibrierpunkt, nämlich einem zweiten eingestellten Durchflusswert, ermittelt. In einem zweiten Korrekturschritt 108 korrigiert die erste Steuer- und Auswerteeinheit 4 wenigstens einen Kalibrierungsparameter unter Berücksichtigung der ermittelten Abweichung. Anschließend übermittelt die erste Steuer- und Auswerteeinheit 4 in einem zweiten Übermittlungsschritt 109 die ermittelte Abweichung im zweiten Kalibrierpunkt und/oder den wenigstens einen korrigierten Kalibrierungsparameter über den Kommunikationskanal 8 an die zweite Steuer- und Auswerteeinheit 7 des zweiten Durchflussmessgerätes 6. In einem zweiten Anpassungsschritt 110 korrigiert die zweite Steuer- und Auswerteeinheit 7 wenigstens einen Kalibrierungsparameter in dem zweiten Kalibrierpunkt unter Berücksichtigung der von der ersten Steuer- und Auswerteeinheit 7 übermittelten Abweichung oder des übermittelten Kalibrierungsparameters. Der Übersicht halber ist dargestellt, dass das Verfahren 100 für zwei verschiedene Kalibrierpunkte ausgeführt wird. Bevorzugt wird das Verfahren 100 in allen werkseitigen Kalibrierpunkten des zweiten Durchflussmessgerätes 6 oder in allen werkseitigen Kalibrierpunkten des ersten Durchflussmessgerätes 4 durchgeführt.

In den Kalibrierschritten 101 und 105 zur Kalibrierung der Kalibriergröße wird eine vorgegebene Anzahl an Abfüllungen an der ersten Füllstelle 2 durchgeführt. Nach jeder Abfüllung wird die tatsächlich abgefüllte Menge als Sollwert durch Auswiegen der abgefüllten Menge bestimmt und der Wert der tatsächlich abgefüllten Menge mit dem von dem ersten Durchflussmessgerät 4 bestimmten Wert verglichen. Die Bestimmung der Abweichung in den Abweichungsbestimmungsschritten 102, 107 erfolgt durch Ermittlung einer Standardabweichung. Zudem wird in den Korrekturschritten 103, 108 eine Geberkonstante als Kalibrierungsparameter korrigiert.

Fig. 4 zeigt eine weitere Ausgestaltung einer Abfüllanlage 1. Die in Fig. 4 dargestellte Abfüllanlage 1 unterscheidet sich von der in Fig. 3 dargestellten und oben beschriebenen Abfüllanlage 1 dadurch, dass die Steuer- und Auswerteeinheit 5 des ersten Durchflussmessgerätes 4 und die Steuer- und Auswerteeinheit 7 des zweiten Durchflussmessgerätes 6 als Untereinheiten 9, 10 einer übergeordneten Steuer- und Auswerteeinheit 11 ausgebildet sind. Zudem ist der Kommunikationskanal 8 zwischen der ersten Steuer- und Auswerteeinheit 5 und der zweiten Steuer- und Auswerteeinheit 7 drahtgebunden, wohingegen der Kommunikationskanal 8 in Fig. 3 drahtlos ist.

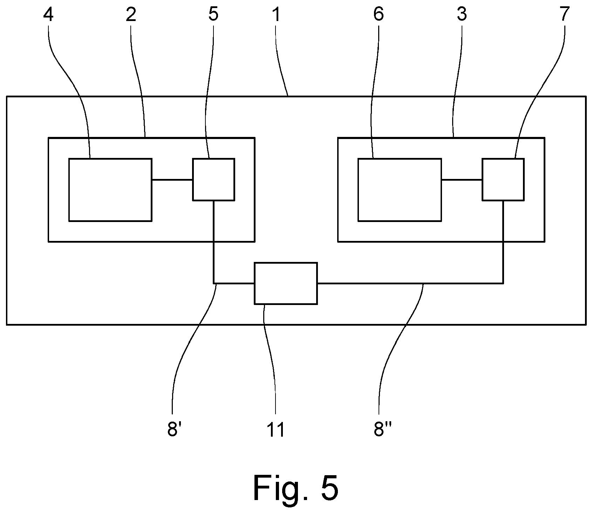

Fig. 5 zeigt eine weitere Ausgestaltung einer Abfüllanlage 1, die sich von der in Fig. 3 dargestellten Abfüllanlage dadurch unterscheidet, dass eine übergeordnete Steuer- und Auswerteeinheit 11 vorgesehen ist, die über einen Kommunikationskanal 8' mit der ersten Steuer- und Auswerteeinheit 5 des ersten Durchflussmessgerätes 4 und über einen weiteren Kommunikationskanal 8" mit der zweiten Steuer- und Auswerteeinheit 7 des zweiten Durchflussmessgerätes 6 verbunden ist. In der dargestellten Ausgestaltung ist die übergeordnete Steuer- und Auswerteeinheit 11 derart ausgestaltet, dass sie die erste Steuer- und Auswerteeinheit 5 und die zweite Steuer- und Auswerteeinheit 7 zur Durchführung der Verfahrensschritte auffordert.

### Bezugszeichen

- 1: Abfüllanlage
- 2: erste Füllstelle
- 3: zweite Füllstelle
- 4: erstes Durchfluss- oder Füllstandmessgerät
- 5: zweites Durchfluss- oder Füllstandmessgerät
- 6: erste Steuer- und Auswerteeinheit
- 7: zweite Steuer- und Auswerteeinheit
- 8: Kommunikationskanal
- 8': Kommunikationskanal
- 8": Kommunikationskanal
- 9: Untereinheit
- 10: Untereinheit
- 11: übergeordnete Steuer- und Auswerteeinheit
- 100: Verfahren
- 101: erster Kalibrierschritt
- 102: erster Abweichbestimmungsschritt
- 103: erster Korrekturschritt
- 104: erster Übermittlungsschritt
- 105: erster Anpassungsschritt
- 106: zweiter Kalibrierschritt
- 107: zweiter Abweichbestimmungsschritt
- 108: zweiter Korrekturschritt
- 109: zweiter Übermittlungsschritt
- 110: zweiter Anpassungsschritt

## Patentansprüche

1. Verfahren (100) zum Kalibrieren einer Abfüllanlage (1) mit wenigstens einer ersten Füllstelle (2) und wenigstens einer zweiten Füllstelle (3), wobei die erste Füllstelle (2) wenigstens ein erstes werkseitig kalibriertes Durchfluss- oder Füllstandmessgerät (4) mit einer ersten Steuer- und Auswerteeinheit (5) aufweist und die zweite Füllstelle (3) wenigstens ein zweites werkseitig kalibriertes Durchfluss- oder Füllstandmessgerät (6) mit einer zweiten Steuer- und Auswerteeinheit (7) aufweist, wobei die Anzahl der werkseitigen Kalibrierpunkte des ersten Durchfluss- oder Füllstandmessgerätes (4) größer ist als die Anzahl der werkseitigen Kalibrierpunkte des zweiten Durchfluss- oder Füllstandmessgerätes (6) und/oder wobei die Verweildauer in wenigstens einem Kalibrierpunkt bei dem ersten Durchfluss- oder Füllstandmessgerät (4) größer ist als die Verweildauer in wenigstens einem Kalibrierpunkt bei dem zweiten Durchfluss- oder Füllstandmessgerät (6), und wobei die Steuer- und Auswerteeinheit (5) des wenigstens ersten Durchfluss- oder Füllstandmessgerätes (4) und die Steuer- und Auswerteeinheit (7) des wenigstens zweiten Durchfluss- oder Füllstandmessgerätes (6) zumindest mittelbar über einen Kommunikationskanal (8) miteinander verbunden sind,
wobei in einem ersten Kalibrierschritt (101) unter Prozessbedingungen eine Kalibrierung einer Kalibriergröße des ersten Durchfluss- oder Füllstandmessgerätes (4) in einem ersten Kalibrierpunkt durchgeführt wird,
wobei in einem ersten Abweichbestimmungsschritt (102) die erste Steuer- und Auswerteeinheit (5) des ersten Durchfluss- oder Füllstandmessgerätes (4) eine durchschnittliche Abweichung der von dem ersten Durchfluss- oder Füllstandmessgerät (4) gemessenen Kalibriergröße zu einem Sollwert dieser Kalibriergröße im ersten Kalibrierpunkt ermittelt,
wobei in einem ersten Korrekturschritt (103) die erste Steuer- und Auswerteeinheit (5) wenigstens einen Kalibrierungsparameter unter Berücksichtigung der ermittelten Abweichung korrigiert,
**dadurch gekennzeichnet,**
**dass** in einem ersten Übermittlungsschritt (104) die erste Steuer- und Auswerteeinheit (5) die ermittelte Abweichung im ersten Kalibrierpunkt und/oder den wenigstens einen korrigierten Kalibrierungsparameter über den Kommunikationskanal (8) an die zweite Steuer- und Auswerteeinheit (7) übermittelt,
und **dass** in einem ersten Anpassungsschritt (105) die zweite Steuer- und Auswerteeinheit (7) wenigstens einen Kalibrierungsparameter in einem ersten Kalibrierpunkt unter Berücksichtigung der von der ersten Steuer- und Auswerteeinheit (5) übermittelten Abweichung oder des übermittelten Kalibrierungsparameters korrigiert.

2. Verfahren (100) nach Anspruch 1, **dadurch gekennzeichnet, dass** die Verfahrensschritte in wenigstens einem weiteren Kalibrierpunkt durchgeführt werden (106-110), insbesondere dass die Verfahrensschritte bevorzugt in den werkseitigen Kalibrierpunkten des zweiten Durchfluss- oder Füllstandmessgerätes (6) durchgeführt werden, weiter bevorzugt, dass die Verfahrensschritte in den werkseitigen Kalibrierpunkten des ersten Durchfluss- oder Füllstandmessgerätes (4) durchgeführt werden.

3. Verfahren (100) nach Anspruch 2, **dadurch gekennzeichnet, dass** der ersten Übermittlungsschritt (104) und der wenigstens zweite Übermittlungsschritt (109), bevorzugt alle Übermittlungsschritte, in einem Gesamtübermittlungsschritt erfolgen.

4. Verfahren (100) nach einem der Ansprüche 1 bis 3, **dadurch gekennzeichnet, dass** im Kalibrierschritt (101, 106) zur Kalibrierung der Kalibriergröße eine vorgegebene Anzahl an Abfüllungen an der ersten Füllstelle (2) durchgeführt werden, dass nach jeder Abfüllung die tatsächlich abgefüllte Menge als Sollwert bestimmt wird, insbesondere durch Auswiegen oder durch Bestimmung mit einem weiteren Durchfluss- oder Füllstandmessgerät, und dass der Wert der tatsächlich abgefüllten Menge, nämlich der Sollwert, mit dem von dem zu kalibrierenden Durchfluss- oder Füllstandmessgerät (2) bestimmten Wert verglichen wird.

5. Verfahren (100) nach einem der Ansprüche 1 bis 4, **dadurch gekennzeichnet, dass** zur Bestimmung der Abweichung im Abweichbestimmungsschritt (102, 107) eine Standardabweichung ermittelt wird.

6. Verfahren (100) nach einem der Ansprüche 1 bis 5, **dadurch gekennzeichnet, dass** im Korrekturschritt (103, 108) wenigstens eine Stützstelle einer Optimierungskurve als Kalibrierungsparameter korrigiert wird oder eine Geberkonstante als Kalibrierungsparameter korrigiert wird.

7. Abfüllanlage (1) mit wenigstens einer ersten Füllstelle (2) und wenigstens einer zweiten Füllstelle (3), wobei die erste Füllstelle (2) wenigstens ein erstes werkseitig kalibriertes Durchfluss- oder Füllstandmessgerät (4) mit einer ersten Steuer- und Auswerteeinheit (5) aufweist und die zweite Füllstelle (3) wenigstens ein zweites werkseitig kalibriertes Durchfluss- oder Füllstandmessgerät (6) mit einer zweiten Steuer- und Auswerteeinheit (7) aufweist, wobei die Anzahl der werkseitigen Kalibrierpunkte des ersten Durchfluss- oder Füllstandmessgerätes (4) größer ist als die Anzahl der werkseitigen Kalibrierpunkte des zweiten Durchfluss- oder Füllstandmessgerätes (6) und/oder wobei die Verweildauer in wenigstens einem Kalibrierpunkt bei dem ersten Durchfluss- oder Füllstandmessgerät (4) größer ist als die Verweildauer in wenigstens einem Kalibrierpunkt bei dem zweiten Durchfluss- oder Füllstandmessgerät (6), und wobei die Steuer- und Auswerteeinheit (5) des wenigstens ersten Durchfluss- oder Füllstandmessgerätes (4) und die Steuer- und Auswerteeinheit (7) des wenigstens zweiten Durchfluss- oder Füllstandmessgerätes (6) über einen Kommunikationskanal (8) zumindest mittelbar miteinander verbunden sind,
**dadurch gekennzeichnet,**
**dass** die Steuer- und Auswerteeinheit (5) des ersten Durchfluss- oder Füllstandmessgerätes (4) und die Steuer- und Auswerteeinheit (7) des zweiten Durchfluss- oder Füllstandmessgerätes (6) derart ausgestaltet sind, dass sie im Betrieb der Abfüllanlage (1) das Verfahren (100) gemäß Anspruch 1 ausführen.

8. Abfüllanlage (1) nach Anspruch 7, **dadurch gekennzeichnet, dass** die erste Steuer- und Auswerteeinheit (5) und die zweite Steuer- und Auswerteeinheit (7) ferner derart ausgestaltet sind, dass sie im Betrieb der Abfüllanlage die Verfahrensschritte (102-110) gemäß wenigstens einem der Ansprüche 2 bis 6 ausführen.

9. Abfüllanlage (1) nach einem der Ansprüche 7 oder 8, **dadurch gekennzeichnet, dass** die erste Steuer- und Auswerteeinheit (5) und die zweite Steuer- und Auswerteeinheit (7) als Untereinheiten (9, 10) einer übergeordneten Steuer- und Auswerteeinheit (11) ausgebildet sind oder dass eine übergeordnete Steuer- und Auswerteeinheit (11) über einen ersten Kommunikationskanal (8') mit der ersten Steuer- und Auswerteeinheit (5) und über einen zweiten Kommunikationskanal (8") mit der zweiten Steuer- und Auswerteeinheit (7) verbunden ist.

10. Abfüllanlage (1) nach einem der Ansprüche 7 bis 9, **dadurch gekennzeichnet, dass** der Kommunikationskanal (8) zwischen der ersten Steuer- und Auswerteeinheit (5) und der zweiten Steuer- und Auswerteeinheit (7) zumindest teilweise drahtgebunden und/oder zumindest teilweise drahtlos ausgebildet ist.

## Claims

1. Method (100) for calibrating a filling system (1) having at least one first filling point (2) and at least one second filling point (3), wherein the first filling point (2) has at least one first factory-calibrated flow or level measuring device (4) having a first control and evaluation unit (5), and the second filling point (3) has at least one second factory-calibrated flow or level measuring device (6) having a second control and evaluation unit (7) wherein the number of factory calibration points of the first flow or level measuring device (4) is greater than the number of factory calibration points of the second flow or level measuring device (6) and/or wherein the dwell time in at least one calibration point in the first flow or level measuring device (4) is greater than the dwell time in at least one calibration point in the second flow or level measuring device (6) and wherein the control and evaluation unit (5) of the at least first flow or level measuring device (4) and the control and evaluation unit (7) of the at least second flow or level measuring device (6) are at least indirectly connected to one another via a communication channel (8),
wherein, in a first calibration step (101), a calibration of a calibration variable of the first flow or level measuring device (4) is performed at a first calibration point under process conditions,
wherein, in a first deviation determination step (102), the first control and evaluation unit (5) of the first flow or level measuring device (4) determines an average deviation of the calibration variable measured by the first flow or level measuring device (4) from a desired value of this calibration variable at the first calibration point,
wherein, in a first correction step (103), the first control and evaluation unit (5) corrects at least one calibration parameter taking into account the determined deviation,
**characterized in**
**that**, in a first transmission step (104), the first control and evaluation unit (5) transmits the determined deviation at the first calibration point and/or the at least one corrected calibration parameter to the second control and evaluation unit (7) via the communication channel (8),
and **that**, in a first adjustment step (105), the second control and evaluation unit (7) corrects at least one calibration parameter at a first calibration point, taking into account the deviation transmitted by the first control and evaluation unit (5) or the transmitted calibration parameter.

2. Method (100) according to claim 1, **characterized in that** the method steps are performed (106-110) in at least one further calibration point, in particular that the method steps are preferably performed in the factory calibration points of the second flow or level measuring device (6), further preferably that the method steps are performed in the factory calibration points of the first flow or level measuring device (4).

3. Method (100) according to claim 2, **characterized in that** the first transmission step (104) and the at least second transmitting step (109), preferably all transmission steps, are performed in one overall transmission step.

4. Method (100) according to any one of claims 1 to 3, **characterized in that**, in the calibration step (101, 106), a predetermined number of fillings are performed at the first filling point (2) for calibrating the calibration variable, that, after each filling, the amount actually filled is determined as a desired value, in particular by weighing or by determination with a further flow or level measuring device, and that the value of the amount actually filled, namely the desired value, is compared with the value determined by the flow or level measuring device (2) to be calibrated.

5. Method (100) according to any one of claims 1 to 4, **characterized in that** a standard deviation is determined for determining the deviation in the deviation determining step (102, 107).

6. Method (100) according to any one of claims 1 to 5, **characterized in that** in the correction step (103, 108) at least one pair of coordinates of an optimization curve is corrected as a calibration parameter or a transmitter constant is corrected as a calibration parameter.

7. Filling system (1) having at least one first filling point (2) and at least one second filling point (3), wherein the first filling point (2) has at least one first factory-calibrated flow or level measuring device (4) having a first control and evaluation unit (5), and the second filling point (3) has at least one second factory-calibrated flow or level measuring device (6) having a second control and evaluation unit (7) wherein the number of factory calibration points of the first flow or level measuring device (4) is greater than the number of factory calibration points of the second flow or level measuring device (6) and/or wherein the dwell time in at least one calibration point in the first flow or level measuring device (4) is greater than the dwell time in at least one calibration point in the second flow or level measuring device (6) and wherein the control and evaluation unit (5) of the at least first flow or level measuring device (4) and the control and evaluation unit (7) of the at least second flow or level measuring device (6) are at least indirectly connected to one another via a communication channel (8),
**characterized in**
**that** the control and evaluation unit (5) of the first flow or level measuring device (4) and the control and evaluation unit (7) of the second flow or level measuring device (6) are designed in such a way that they perform the method (100) according to claim 1 during operation of the filling system (1).

8. Filling system (1) according to claim 7, **characterized in that** the first control and evaluation unit (5) and the second control and evaluation unit (7) are further configured in such a way that, during operation of the filling system, they perform the method steps (102-110) according to at least one of claims 2 to 6.

9. Filling system (1) according to any one of claims 7 or 8, **characterized in that** the first control and evaluation unit (5) and the second control and evaluation unit (7) are designed as subunits (9, 10) of a higher-level control and evaluation unit (11), or that a higher-level control and evaluation unit (11) is connected via a first communication channel (8') to the first control and evaluation unit (5) and via a second communication channel (8") to the second control and evaluation unit (7).

10. Filling system (1) according to any one of claims 7 to 9, **characterized in that** the communication channel (8) between the first control and evaluation unit (5) and the second control and evaluation unit (7) is designed to be at least partially wired and/or at least partially wireless.

## Revendications

1. Procédé (100) pour étalonner une installation de remplissage (1) comprenant au moins un premier point de remplissage (2) et au moins un deuxième point de remplissage (3), le premier point de remplissage (2) possédant au moins un premier appareil de mesure de débit ou de niveau de remplissage (4) étalonné en usine avec une première unité de commande et d'évaluation (5) et le deuxième point de remplissage (3) possédant au moins un deuxième appareil de mesure de débit ou de niveau de remplissage (6) étalonné en usine avec une deuxième unité de commande et d'évaluation (7), le nombre de points d'étalonnage en usine du premier appareil de mesure de débit ou de niveau de remplissage (4) étant supérieur au nombre de points d'étalonnage en usine du deuxième appareil de mesure de débit ou de niveau de remplissage (6) et/ou la durée de séjour en au moins un point d'étalonnage avec le premier appareil de mesure de débit ou de niveau de remplissage (4) étant supérieur à la durée de séjour en au moins un point d'étalonnage avec le deuxième appareil de mesure de débit ou de niveau de remplissage (6), et l'unité de commande et d'évaluation (5) de l'au moins premier appareil de mesure de débit ou de niveau de remplissage (4) et l'unité de commande et d'évaluation (7) de l'au moins deuxième appareil de mesure de débit ou de niveau de remplissage (6) étant reliées l'une à l'autre au moins indirectement par l'intermédiaire d'un canal de communication (8),
dans une première étape d'étalonnage (101), un étalonnage d'une grandeur d'étalonnage du premier appareil de mesure de débit ou de niveau de remplissage (4) étant effectué en un premier point d'étalonnage dans les conditions du processus,
dans une première étape de détermination d'écart (102), la première unité de commande et d'évaluation (5) du premier appareil de mesure de débit ou de niveau de remplissage (4) déterminant un écart moyen de la grandeur d'étalonnage mesurée par le premier appareil de mesure de débit ou de niveau de remplissage (4) par rapport à une valeur de consigne de cette grandeur d'étalonnage au premier point d'étalonnage,
dans une première étape de correction (103), la première unité de commande et d'évaluation (5) corrige au moins un paramètre d'étalonnage en tenant compte de l'écart déterminé,
**caractérisé en ce que**, dans une première étape de communication (104), la première unité de commande et d'évaluation (5) communique l'écart déterminé dans le premier point d'étalonnage et/ou l'au moins un paramètre d'étalonnage corrigé à la deuxième unité de commande et d'évaluation (7) par l'intermédiaire du canal de communication (8),
et **en ce que** dans une première étape d'adaptation (105), la deuxième unité de commande et d'évaluation (7) corrige au moins un paramètre d'étalonnage en un premier point d'étalonnage en tenant compte de l'écart communiqué par la première unité de commande et d'évaluation (5) ou du paramètre d'étalonnage communiqué.

2. Procédé (100) selon la revendication 1, **caractérisé en ce que** les étapes sont exécutées dans au moins un point d'étalonnage supplémentaire (106-110), en particulier **en ce que** les étapes du procédé sont exécutées de préférence dans les points d'étalonnage en usine du deuxième appareil de mesure de débit ou de niveau de remplissage (6), de préférence encore **en ce que** les étapes du procédé sont exécutées aux points d'étalonnage en usine du premier appareil de mesure de débit ou de niveau de remplissage (4).

3. Procédé (100) selon la revendication 2, **caractérisé en ce que** la première étape de communication (104) et l'au moins deuxième étape de communication (109), de préférence toutes les étapes de communication, sont exécutées dans une étape de communication globale.

4. Procédé (100) selon l'une des revendications 1 à 3, **caractérisé en ce qu'**un nombre prédéfini de remplissages sont exécutés au niveau du premier point de remplissage (2) à l'étape de calibrage (101, 106) en vue de l'étalonnage de la grandeur d'étalonnage, **en ce qu'**après chaque remplissage, la quantité effectivement remplie est déterminée comme valeur de consigne, en particulier par pesée ou par détermination avec un appareil de mesure de débit ou de niveau de remplissage supplémentaire, et **en ce que** la valeur de la quantité réellement remplie, à savoir la valeur de consigne, est comparée à la valeur déterminée par l'appareil de mesure de débit ou de niveau de remplissage (2) à étalonner.

5. Procédé (100) selon l'une des revendications 1 à 4, **caractérisé en ce qu'** un écart type est identifié en vue de déterminer l'écart dans l'étape de détermination de l'écart (102, 107).

6. Procédé (100) selon l'une des revendications 1 à 5, **caractérisé en ce que** dans l'étape de correction (103, 108), au moins un point d'appui d'une courbe d'optimisation est corrigé en tant que paramètre d'étalonnage ou une constante de transmetteur est corrigée en tant que paramètre d'étalonnage.

7. Installation de remplissage (1) comprenant au moins un premier point de remplissage (2) et au moins un deuxième point de remplissage (3), le premier point de remplissage (2) possédant au moins un premier appareil de mesure de débit ou de niveau de remplissage (4) étalonné en usine avec une première unité de commande et d'évaluation (5) et le deuxième point de remplissage (3) possédant au moins un deuxième appareil de mesure de débit ou de niveau de remplissage (6) étalonné en usine avec une deuxième unité de commande et d'évaluation (7), le nombre de points d'étalonnage en usine du premier appareil de mesure de débit ou de niveau de remplissage (4) étant supérieur au nombre de points d'étalonnage en usine du deuxième appareil de mesure de débit ou de niveau de remplissage (6) et/ou la durée de séjour en au moins un point d'étalonnage avec le premier appareil de mesure de débit ou de niveau de remplissage (4) étant supérieur à la durée de séjour en au moins un point d'étalonnage avec le deuxième appareil de mesure de débit ou de niveau de remplissage (6), et l'unité de commande et d'évaluation (5) de l'au moins premier appareil de mesure de débit ou de niveau de remplissage (4) et l'unité de commande et d'évaluation (7) de l'au moins deuxième appareil de mesure de débit ou de niveau de remplissage (6) étant reliées l'une à l'autre au moins indirectement par l'intermédiaire d'un canal de communication (8), **caractérisée en ce**
**que** l'unité de commande et d'évaluation (5) du premier appareil de mesure de débit ou de niveau de remplissage (4) et l'unité de commande et d'évaluation (7) du deuxième appareil de mesure de débit ou de niveau de remplissage (6) sont configurées de telle sorte qu'elles mettent en œuvre le procédé (100) selon la revendication 1 lors du fonctionnement de l'installation de remplissage (1).

8. Installation de remplissage (1) selon la revendication 7, **caractérisée en ce que** la première unité de commande et d'évaluation (5) et la deuxième unité de commande et d'évaluation (7) sont en outre configurées de telle sorte qu'elles exécutent les étapes de procédé (102-110) selon au moins l'une des revendications 2 à 6 pendant le fonctionnement du système de remplissage.

9. Installation de remplissage (1) selon l'une des revendications 7 ou 8, **caractérisée en ce que** la première unité de commande et d'évaluation (5) et la deuxième unité de commande et d'évaluation (7) sont réalisées sous la forme de sous-unités (9, 10) d'une unité de commande et d'évaluation (11) de niveau supérieur ou **en ce qu'**une unité de commande et d'évaluation (11) de niveau supérieur est reliée à la première unité de commande et d'évaluation (5) par l'intermédiaire d'un premier canal de communication (8') et à la deuxième unité de commande et d'évaluation (7) par l'intermédiaire d'un deuxième canal de communication (8").

10. Installation de remplissage (1) selon l'une des revendications 7 à 9, **caractérisée en ce que** le canal de communication (8) entre la première unité de commande et d'évaluation (5) et la deuxième unité de commande et d'évaluation (7) est réalisé au moins partiellement de manière filaire et/ou au moins partiellement sans fil.
